# EUROPÄISCHE PATENTANMELDUNG

(11) **EP 0 870 973 A1**
(43) Veröffentlichungstag der Anmeldung: **14.10.1998**
(21) Anmeldenummer: 98103742.7
(22) Anmeldetag: 03.03.1998
(51) Int. Cl.: F16N 13/04

(54) **Pumpenaggregat für Schmieröl**

(30) Priorität: 09.04.1997 DE 29706344 U
(71) Anmelder: Joseph Vögele AG, D-68146 Mannheim (DE)
(72) Erfinder: Saam, Werner, 68794 Oberhausen (DE); Prestel, Gottfried, 68794 Oberhausen-Rheinhausen (DE)
(74) Vertreter: Grünecker, Kinkeldey, Stockmair & Schwanhäusser Anwaltssozietät

(57) **Zusammenfassung**

In einem Pumpenaggregat für Schmieröl, insbesondere zur Öl-Verbrauchsschmierung von Kompressoren, mit wenigstens einem Pumpengehäuse (G), in dem in Reihenanordnung für jede Schmierstelle ein mit einem gemeinsamen Antrieb verbundenes Kolbenpaar vorgesehen ist, das auf der einem Schmierölreservoir (R) zugewandten Ansaugseite einen verschiebbaren Dosierkolben (F) und stromauf des Schmierstellenanschlusses einen verschiebbaren Arbeitskolben (Z) aufweist, wobei ferner eine optische Öl-Tropf-Kontrollvorrichtung (K) mit einem Schauglas an einer Saugseite des Arbeitskolbens (Z) eine im wesentlichen überdruckfreie Ansaugstrecke (F) vorgesehen sind, in welcher stromauf des Arbeitskolbens (Z) die Öl-Tropf-Kontrollvorrichtung (K) angeordnet ist, sind die Dosier- und Arbeitskolben (Z, F) koaxial hintereinanderliegend in einem als Baueinheit mit einem Einschraubgehäuse (7) ausgebildeten und in das Pumpengehäuse (G) eingesetzten Pumpenelement (E) angeordnet, und ist am Pumpenelement (E) zwischen einer Einstellvorrichtung (V) für die Förderleistung und dem Einschraubgehäuse (7) ein Zwischenteil (9) mit einem Rückschlagventil (M) und ein Schmierstellenanschluß (5, 36) vorgesehen.

## Beschreibung

Die Erfindung betrifft ein Pumpenaggregat der im Oberbegriff des Anspruchs 1 angegebenen Art.

Bei einem aus FR-A-1 204 728 bekannten Pumpenaggregat werden für die Funktion des Dosier- und Arbeitskolbens benötigte Komponenten und auch die Komponenten der Öl-Tropf-Kontrollvorrichtung einzeln in das Pumpengehäuse eingebaut, das an einen das Reservoir definierenden Behälter angesetzt ist. Dies führt zu hohem Herstellungs- und Montageaufwand und erschwert die einwandfreie Zusammenarbeit zwischen den beiden Kolben.

Bei einer aus US-A-2 886 135 bekannten Schmierstoffpumpe ist ein hin- und hergehend und rotierend angetriebener Kolben in einem am Boden des Ölbehälters angeordneten Zylinder vorgesehen.

Bei einer aus FR-A-815 779 bekannten Schmierstoffpumpe betätigt ein Arbeitskolben mittels eines Stößels ein Auslaßventil, um die aus dem Reservoir direkt angesaugte Schmierstoffmenge zum Schmierstellenanschluß zu befördern. Die Förderleistung wird eingestellt durch Verändern der axialen Lage des Auslaßventils in Bezug auf den Umkehrpunkt des Arbeitskolbens.

Bei einer aus DE-C-500 987 bekannten Schmierpumpe für nur eine Schmierstelle sind ein Arbeitskolben und ein Hilfskolben koaxial hintereinander gesetzt, einerseits um gemeinsam den angesaugten Schmierstoff zum Schmieranschluß zu pressen, andererseits um durch die Einstellung des Hubweges des Hilfskolbens die Fördermenge zu verstellen.

Bei einer Schmiermittelpumpe mit einstellbarer Dosiervorrichtung gemäß EP-A-0 344 431 sind ein Förderkolben und ein mit einem Rückschlagventil vereiniger Stellkolben koaxial hintereinanderliegend in einem Stufenzylinder angeordnet. Der Förderkolben wird mittels eines Exzenters betätigt und schiebt das angesaugte Schmiermittel am Stellkolben vorbei und über das Rückschlagventil in einen Zwischenspeicherraum, aus dem das Schmiermittel zum Schmieranschluß gedrückt wird. Die einstellbare Position des Stellkolbens im Zylinder definiert die Förderleistung.

Aus technischen Informationsschriften DSB 1-019-00 (08.94) und DSK 1-019-00 (04.79) "Ölschmierpumpe JM" der Fa. Joseph Vögele AG ist es bekannt, den Dosierkolben und den Arbeitskolben in voneinander getrennten Zylindern übereinanderliegend anzuordnen. Der Dosierkolben nimmt beim Saugtakt Schmieröl aus dem Reservoir auf, fördert es beim Drucktakt nach oben und über ein Rückschlagventil in die Tropfdüse, aus der Tropfen austreten, die von oben in den Zylinder des Arbeitskolbens gelangen, der das Schmieröl im Drucktakt durch einen Druckkanal und durch ein Rückschlagventil zum Schmierstellenanschluß pumpt. Der Füllstand im Ölreservoir liegt deutlich oberhalb der Tropfdüse; ggfs. wird das Schmieröl dem Dosierkolben sogar unter Druck zugeführt. Die Förderleistung wird eingestellt durch Axialverschieben des den Dosierkolben aufnehmenden Zylinders. Die optische Öl-Tropf-Kontrollvorrichtung für je zwei Kolbenpaare ist im Ölströmungsweg zwischen den Kolben angeordnet. Das Pumpenaggregat kann aus bis zu sechs Pumpengehäusen für je zwei Schmierstellen zusammengesetzt sein, ist selbstansaugend und nur für Schmieröl geeignet. Der Betriebsdruck ist außerordentlich hoch (bis zu 600 Bar), u.a. weil der Arbeitskolben mit dem Antrieb zwangsgekoppelt ist, jeweils einen maximalen Hub ausführt, und weil beide Kolben sehr eng eingepaßt sind. Bauartbedingt und auch wegen des hohen Betriebsdauerdrucks ist das bekannte Pumpenaggregat aufwendig und teuer. Bei Einsatzfällen, in denen ein niedrigerer Betriebsdruck benötigt wird, ist dieses Pumpenaggregat überqualifiziert, weil seine Leistungsfähigkeit nicht nutzbar ist.

Der Erfindung liegt die Aufgabe zugrunde, ein Schmieröl-Pumpenaggregat der eingangs genannten Art für einfache Anwendungsfälle anzugeben, das baulich einfacher und kostengünstiger als das bekannte Pumpenaggregat ist, und das zweckmäßig einen Dauerbetriebsdruck von maximal etwa 350 Bar und mit gutem Wirkungsgrad einen Arbeitsbereich zwischen ca. 100 bis 150 Bar abdeckt.

Die gestellte Aufgabe wird erfindungsgemäß mit den Merkmalen des Anspruchs 1 gelöst.

Die Anordnung der Öl-Tropf-Kontrollvorrichtung stromauf des Arbeitskolbens in der im wesentlichen überdruckfreien Ansaugstrecke sowie die in einem vorfertigbaren Pumpenelement untergebrachten Dosier- und Arbeitskolben führen zu einer erheblichen baulichen Vereinfachung. Das Pumpenaggregat ist dadurch kostengünstig herstellbar und dennoch modulartig für beispielsweise 24 Schmierstellen erweiterbar. Da der Arbeitskolben das Schmieröl erst über die Öl-Tropf-Kontrollvorrichtung ansaugen muß, und den Dosierkolben im gemeinsamen Zylinder mittels der angesaugten Ölcharge verschiebt, läßt sich an der Schmierstelle ein Dauerarbeitsdruck von nur etwa 350 Bar einstellen, bzw. arbeitet das Pumpenaggregat auch in einem Druckbereich zwischen ca. 100 und 150 Bar mit günstigem Wirkungsgrad. Zur kostengünstigen Herstellung tragen insbesondere das komplett vorfertigbare, kompakte Pumpenelement und die ebenfalls vorfertigbare Öl-Tropf-Kontrollvorrichtung bei, die nach Einsetzen in das Pumpengehäuse zusammenwirken. Die zwecks baulicher Vereinfachung in der zumindest im wesentlichen überdrucklosen Ansaugstrecke angeordnete Öl-Tropf-Kontrollvorrichtung ermöglicht stets eine aussagefähige Kontrolle, ob das Kolbenpaar korrekt arbeitet. Es sind die Pumpenelemente einfach zu montieren. Jedes Pumpenpelement ist kostengünstig vorfertigbar und weist neben der Einstellvorrichtung auch das Rückschlagventil zum Schmierstellenanschluß sowie beide Kolben auf. Es läßt sich deshalb ein herstellungstechnisch einfaches Pumpengehäuse verwenden

Gemäß Anspruch 2 läßt sich zweckmäßig die Förderleistung auch im Betrieb einstellen oder verändern.

Gemäß Anspruch 3 läßt sich der Hub des Dosierkolbens auch während des Betriebs durch axiales Verstellen der Einstellhülse verändern, was bei laufendem Verbraucher die individuelle, feinfühlige und vor allem rasche Anpassung an den Verbrauch zuläßt.

Gemäß Anspruch 4 wird die Einstellbarkeit während des Betriebs auf baulich einfache Weise erreicht. Die Kugel-Drehverrastung kann mehrere, deutlich fühlbare Raststellungen definieren. Es wäre aber auch denkbar, eine stufenlose Verstellung vorzunehmen.

Gemäß Anspruch 5 wird durch die Höhenlage der Überlaufschwelle in Bezug auf den Füllstand des Reservoirs sichergestellt, daß die Öl-Tropf-Kontrollvorrichtung nicht durch unkontrolliert zulaufendes Schmieröl funktionslos werden kann.

Gemäß Anspruch 6 ist diese Forderung besonders einfach dadurch erfüllt, daß sich die Öl-Tropf-Kontrollvorrichtung oberhalb des Füllstands befindet. Die Öl-Tropf-Kontrollvorrichtung kann auf der Oberseite des Pumpengehäuses angeordnet sein, derart, daß der Füllstand des Reservoirs genügend tief liegt. Gegebenenfalls saugt jedes Pumpenelement sogar über eine Ansaugleitung aus einem externen und tieferliegenden Reservoir an.

Eine baulich einfache, herstellungstechnisch günstige und zuverlässige Ausbildung ist in Anspruch 7 erläutert. Für den Fall, daß aus unvorhersehbaren Gründen die Öl-Tropf-Kontrollvorrichtung mit Schmieröl vollgelaufen sein sollte, kann oberhalb der Tropfdüse eine Entlüftungsschraube vorgesehen sein. Nach Öffnen der Entlüftungsschraube läßt sich die Öl-Tropf-Kontrollvorrichtung mittels des Pumpenelementes leer pumpen, damit die Funktionskontrolle anhand der Tropfenüberwachung wieder möglich wird.

Gemäß Anspruch 8 läßt sich das Pumpenaggregat modulartig für bis zu 24 Schmierstellen auslegen.

Gemäß Anspruch 9 versorgt ein Pumpengehäuse bis zu acht Schmierstellen, wobei für jede Schmierstelle eine eigene Öl-Tropf-Kontrollvorrichtung vorgesehen ist. Es lassen sich jedoch auch weniger als acht Pumpenelemente einsetzen.

Gemäß Anspruch 10 werden zum Aufbauen des Pumpenaggregats für bis zu 24 Schmierstellen mehrere Pumpengehäuse mit einer gemeinsamen Antriebsvorrichtung kombiniert.

Anhand der Zeichnung werden Ausführungsformen des Erfindungsgegenstandes erläuert. Es zeigen:
- Fig. 1: eine schematische Perspektivansicht eines Schmieröl-Pumpenaggregats,
- Fig. 2: einen Längsschnitt durch eine erste Ausführungsform eines Pumpenelementes, das in der Anordnung von Fig. 1 verwendbar ist,
- Fig. 3: einen Längsschnitt einer zweiten Ausführungsform eines Pumpenelementes,
- Fig. 4: eine Vorderansicht eines Teils des Pumpenaggregats von Fig. 1, teilweise im Schnitt,
- Fig. 5: einen Querschnitt in der Ebene V-V von Fig. 4, und
- Fig. 6: einen Längsschnitt des Pumpenaggregats mit zwei Pumpengehäusen.

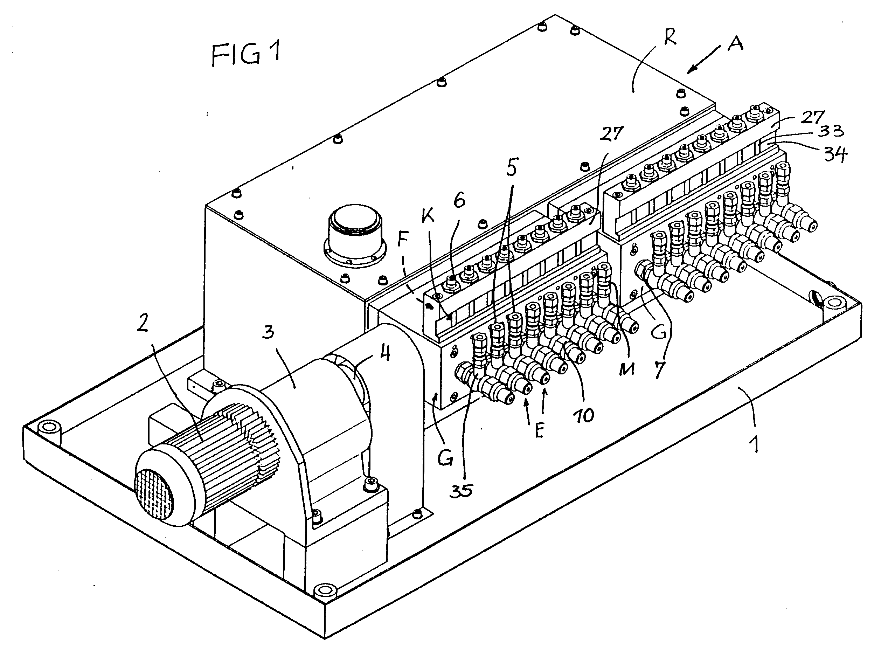

Ein Pumpenaggregat A für Schmieröl, insbesondere zur Öl-Verbrauchsschmierung von Kompressoren, weist in einer Wanne 1 einen Drehstrom-Getriebemotor 2, 3 auf, der über eine elastische Kupplung 4 in Reihenanordnung vorgesehene Pumpenelemente E für mehrere Schmierstellenanschlüsse 5 treibt. Jedes Pumpenelement E ist in ein Pumpengehäuse G einsetzbar, wobei in Fig. 1 das Pumpenaggregat A zwei Pumpengehäuse G mit jeweils acht Pumpenelementen E aufweist. Die Pumpengehäuse G sind seitlich neben einem Schmierölreservoir R vorgesehen, wobei zu den Pumpengehäusen G eine nicht dargestellte Schmierölzufuhr verläuft. Die Schmierölzufuhr kann aus einer gemeinsamen Versorgungsleitung oder aus einzelnen Versorgungsleitungen bestehen. Denkbar ist es ferner, das Schmierölreservoir R getrennt von den Pumpengehäusen G anzuordnen. Jedem Pumpenelement E ist eine Bauteilgruppe 6 zugeordnet, die eine optische Öl-Tropf-Kontrollvorrichtung K (ein Schauglas oder Schaurohr) aufweist, die zweckmäßigerweise höher angeordnet ist als der Füllstand des Schmierölreservoirs R. Obwohl in Fig. 1 nur zwei Pumpengehäuse G mit jeweils acht Schmieranschlüssen 5, 36 vorgesehen sind, könnte auch ein Gehäuse G mit acht Schmieranschlüssen oder auch weniger Schmieranschlüssen vorgesehen sein, oder könnte noch wenigstens ein drittes Gehäuse G koaxial mit den beiden anderen angeordnet und mittels desselben Antriebs 2, 3 angetrieben sein.

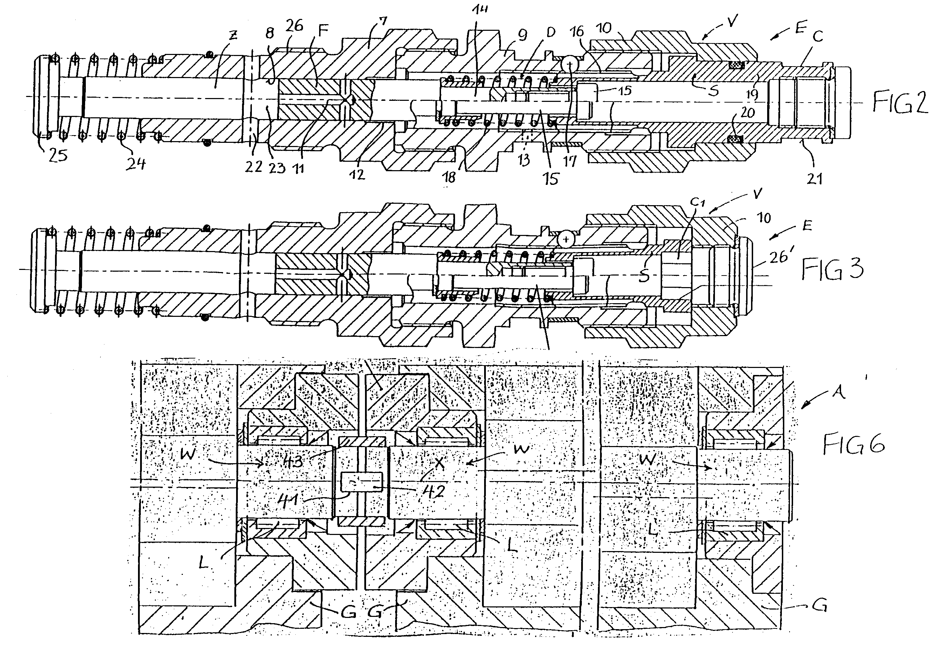

In Fig. 2 ist ein Pumpenelement E, das beispielsweise in Fig. 1 verwendet wird, im Längsschnitt und in einer Arbeitsstellung dargestellt, in der ein Arbeitstakt beginnt.

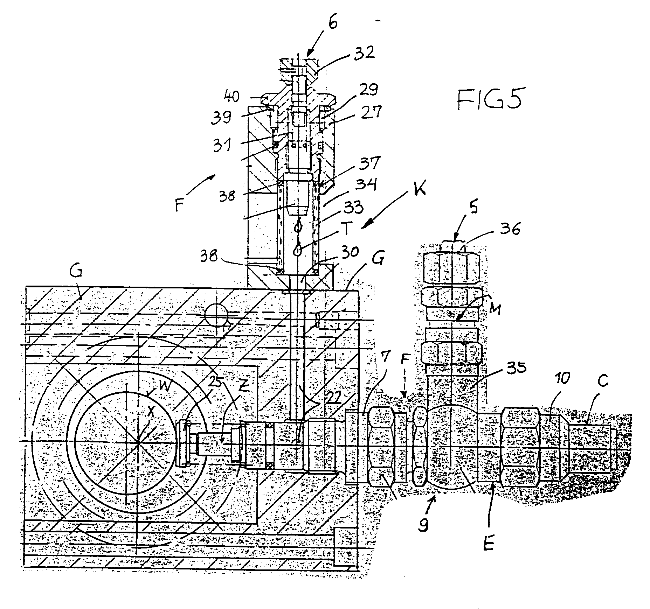

Hauptteil des als eine Baueinheit ausgebildeten Pumpenelements E ist ein Einschraubgehäuse 7 mit einem Außengewinde 26, das sich in das Pumpengehäuse G einschrauben läßt, bis ein Kolbenende 25 eines durch eine Rückstellfeder 24 belasteten Arbeitskolbens Z an einer beispielsweise in Fig. 5 gezeigten Exzenterwelle W im Pumpengehäuse G anliegt. Die Achse der Exzenterwelle W ist mit X angedeutet. Der Arbeitskolben Z ist in einem Zylinder 8 im Einschraubgehäuse 7 verschiebbar. Koaxial zum Arbeitskolben Z ist ein Dosierkolben F im gleichen Zylinder 8 verschiebbar. Der Dosierkolben F ist mit einem Innenkanal 11 versehen und über einen Fortsatz 14 und eine Halteschraube 15 im Fortsatz 14 mit einer Einstellhülse S derart gekoppelt, daß er sich in Fig. 2 nach rechts gegen die Kraft einer Rückstellfeder 18 verschieben läßt und im durch die Rückstellfeder 18 bewirkten Rückstellhub an der Einstellhülse S abgefangen wird. Die Komponenten 15, 14, 18, S definieren eine axial vorgespannte Anschlagkupplung D für den Dosierkolben F. Die Anschlagkupplung D befindet sich in einem in das Einschraubgehäuse 7 eingeschraubten Zwischenteil 9, auf den am rechten Ende eine Überwurfmutter 10 aufgeschraubt ist. In diesem Bereich des Pumpenelementes E ist eine Einstellvorrichtung V für die Förderleistung des Pumpenelements E untergebracht. Die Einstellhülse S ist mit einem Außengewinde 16 in den Zwischenteil 9 eingeschraubt. Die Drehstellung der Einstellhülse S wird durch eine Kugelverrastung 17 mit mehreren definierten Raststellungen festlegt. Ein Endabschnitt 19 der Einstellhülse S ragt durch eine Dichtung 20 aus dem Pumpenelement E. Auf dem Endabschnitt 19 ist ein Einstellorgan C angeformt, beispielsweise zwei parallele Abflachungen 21, die eine bestimmte Schlüsselweite definieren.

Im Übergang vom Einschraubgehäuse 7 zum Zwischenteil 9 ist der Zylinder 8 bei 12 aufgeweitet. Die Aufweitung 12 steht mit dem Innenraum des Zwischenteils 9 in Verbindung, der über wenigstens einen radialen Auslaß 13 nach außen offen ist. In diesem Bereich ist außen auf dem Zwischenteil 9 ein Ringteil 35 abgedichtet festgelegt, der (Fig. 5) ein vorgespanntes Rückschlagventil M und den Schmieranschluß 5 (Anschlußleitung 36) aufweist. Zwischen dem Arbeitskolben Z und dem Dosierkolben F ist eine Kammer 23 vorgesehen, die über Ansaugöffnungen 22 zum Inneren des Pumpengehäuses G (zur Schmierölzufuhr) offen ist.

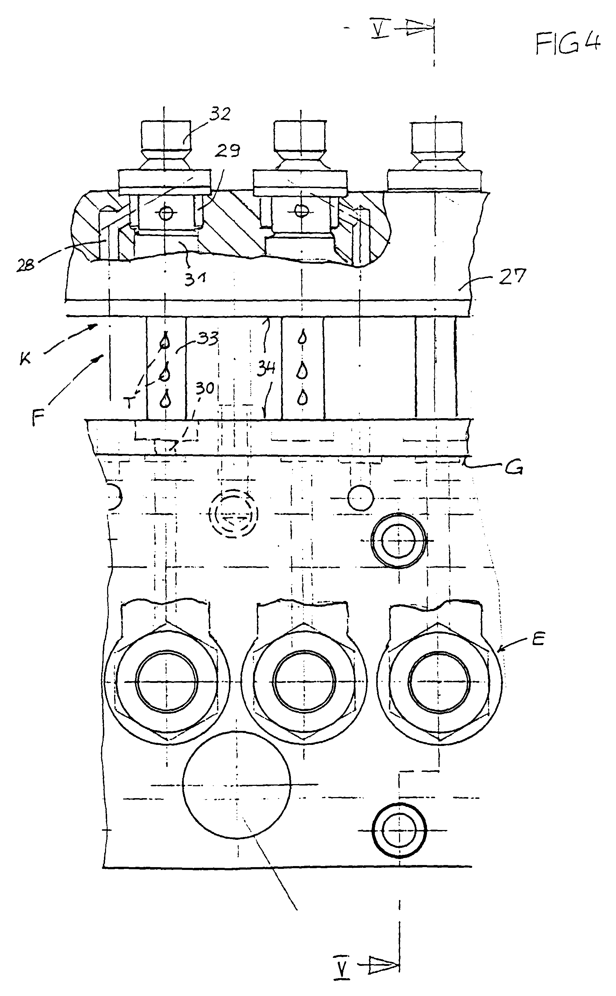

In Fig. 3 ist eine zweite Ausführungsform eines Pumpenelements E im Längsschnitt angedeutet, das sich von dem Pumpenelement der Fig. 2 dadurch unterscheidet, daß die Einstellvorrichtung V für die Förderleistung im Inneren der Überwurfmutter 10 angeordnet ist. Dadurch läßt sich die Förderleistung, z.B. nach Stillsetzen des Pumpenaggregats A, erst nach Entnahme einer Verschlußschraube 26' verstellen.

Bei beiden Pumpenelementen E in den Fig. 2 und 3 wird durch Verschrauben der Einstellhülse S der Hub des Dosierkolbens F verändert, d.h., der Punkt axial verstellt, an dem die Befestigungsschraube 15 den Dosierkolben F bei seiner Bewegung in Richtung zum Arbeitskolben abfängt.

### Funktion des Pumpenelements E, z.B. in Fig. 2:

In der in Fig. 2 gezeigten Arbeitsstellung hat der Arbeitskolben Z gerade einen Saughub (unter der Kraft der Rückstellfeder 24) ausgeführt und durch die Einlässe 22 Schmieröl in die Kammer 23 gesaugt. Der Dosierkolben F ist unter der Kraft der Rückstellfeder 18 bis zum Anschlag der Befestigungsschraube 15 in der Einstellhülse S nach links verfahren. Die Innenkanäle 11 im Dosierkolben F sind von der Wand des Zylinders 8 verschlossen. Nun wird der Arbeitskolben Z in Fig. 2 nach rechts und gegen die Kraft der Rückstellfeder 24 verschoben, bis sein Vorderende die Einlässe 22 verschließt. Die Schmieröl-Charge in der Kammer 23, die zumindest theoretisch inkompressibel ist, verschiebt den Dosierkolben F nach rechts und gegen die Kraft der Rückstellfeder 18, bis schließlich die seitlichen Auslässe des Kanals 11 sich mit der Aufweitung 12 überschneiden. Das Schmieröl wird über die Aufweitung 12 ins Innere des Zwischenteils 9 gepreßt und durch den Auslaß 13 und über das Rückschlagventil M zum Schmierstellenanschluß 5 gepumpt.

Sobald der Arbeitskolben Z am Ende seines Hubweges die Bewegungsrichtung umkehrt, kehrt auch der Dosierkolben F unter dem Druck der Rückstellfeder 18 und dem Druck des Schmieröls im Zwischenteil 9 um, bis schließlich die seitlichen Auslässe des Innenkanals 11 aus der Aufweitung 12 austreten und die Rückstellfeder 18 und der Druck des Schmieröls im Inneren des Zwischenteils 9 den Dosierkolben F bis zum Abfangen der Befestigungsschraube 5 in der Einstellhülse S zurückschieben. Der Arbeitskolben Z setzt seine Bewegung nach links fort und saugt ab Freigabe der Einlässe 22 eine neue Schmierölcharge in die Kammer 23.

Die bei jedem Arbeitstakt geförderte Menge des Schmieröls ist einstellbar mittels der Einstellvorrichtung V. Wird die Einstellhülse S gegenüber der gezeichneten Lage durch Verschrauben nach links verstellt, dann verkleinert sich die Menge, und umgekehrt. Das Pumpenelement E der Fig. 3 funktioniert gleichartig.

Die Fig. 4 und 5 verdeutlichen die Zufuhr des Schmieröls zum Pumpenelement E. Zu den Einlässen 22 verläuft im Pumpengehäuse G ein Zuführkanal, der aus einer im wesentlichen überdrucklosen Ansaugstrecke F mit frischem Schmieröl in Form von Tropfen T versorgt wird. Die Ansaugstrecke F besteht aus einem ansteigenden Abschnitt 28 und einem abfallenden Abschnitt 30, zwischen denen sich eine Überlaufschwelle 29 befindet. Die Überlaufschwelle 29 sollte zweckmäßigerweise oberhalb des Füllstandes des Schmieröls im Schmierölreservoir R sein, so daß Schmieröl nur unter dem Ansaugdruck des Arbeitskolbens Z in die Kammer 23 (Fig. 2) gelangt, und nicht etwa durch überhöhten Zulaufdruck.

Auf das Pumpengehäuse G ist oben ein Gehäuseteil 27 aufgesetzt, in dem für jedes Pumpenelement E eine Tropfdüse 31 mit zugeordneter Entlüftungsschraube 32 in einer Aufnahme 37 angeordnet ist, die sich im Verlauf des abfallenden Abschnitts 30 der Ansaugstrecke F befindet. In der Aufnahme 37 ist in einer nach außen offenen Aussparung 34 des Gehäuseteils 27 ein zumindest bereichsweise durchsichtiges Schaurohr 33 zwischen von Dichtungen 38 gebildeten Widerlagern angeordnet. Die aus der Tropfdüse 31 (z.B. eine sich in Strömungsrichtung verengende Bohrung) austretenden Tropfen T können in dem stehend angeordneten Schaurohr 33 kontrolliert werden. Die Überlaufschwelle 29 wird beispielsweise durch eine Ringkammer 29 definiert, die nach außen durch eine Dichtung 39 und das Schraubende 40 der Tropfdüse 31 verschlossen ist.

In Fig. 6 sind zwei Pumpengehäuse G in dem Pumpenaggregat A miteinander kombiniert, z.B., um insgesamt sechzehn Schmierstellen mittels des Antriebes 2, 3 zu versorgen. In jedem Pumpengehäuse G ist ein durchgehender Abschnitt der Exzenterwelle W in Lagerungen L gelagert. Die in Fig. 6 linke Exzenterwelle W ist über die elastische Kupplung 4 (Fig. 1) mit dem Antrieb 2, 3 verbunden. Sie weist am rechten Ende eine Quernut 41 auf, in die ein Kupplungselement 42 eingesetzt ist, das durch einen Sicherungsring 43 gehalten wird. Das Kupplungselement 42 greift in eine entsprechende Quernut in die Exzenterwelle W im zweiten Pumpengehäuse G ein. Sofern ein drittes Pumpengehäuse G koaxial zu den beiden anderen Pumpengehäusen vorgesehen wird, ist zwischen dem zweiten und dem dritten Pumpengehäuse eine gleichartige Kupplung vorgesehen.

Das Pumpenaggregat ist baulich einfach und kostengünstig herstellbar, da seine hauptsächlichen Komponenten, d.h. die Pumpenelemente E mit den Schmierstellenanschlüssen 5, und der Gehäuseteil 27 mit den Tropfdüsen 31 und den Schaurohren 33 vorfertigbare Baueinheiten sind, die sich modulartig mit dem Pumpengehäuse G kombinieren lassen, das nur mehr die Funktion eines Verteilerblocks und einer Lagerung für die Exzenterwelle hat. Da der Dosierkolben F durch die Ölcharge und indirekt mittels des Arbeitskolbens Z verschoben wird und kostengünstige, moderate Gleitpassungen für die Kolben Z, F vorgesehen sein können, läßt sich für das Schmieröl ein moderater Dauerbetriebsdruck, z.B. ca. 350 Bar erreichen, und arbeitet das Pumpenaggregat A auch in einem Bereich zwischen 100 und 150 Bar mit gutem Wirkungsgrad.

In den Fig. 2 und 3 sind der Arbeitskolben Z und der Dosierkolben F mit 8,0 mm Durchmesser für eine vorbestimmte maximale Fördermenge pro Arbeitstakt ausgelegt. Zusätzlich ist in den Fig. 2 und 3 innerhalb des Zwischenteils 9 und unterhalb der Mittelachse angedeutet, daß auch kleindurchmeßrigere Zubringer- und Arbeitskolben Z, F mit z.B. nur 6,0 mm Durchmesser, verwendet werden können. Es ist dann nur erforderlich, ein Einschraubgehäuse 7 mit einem kleindurchmeßrigeren Zylinder 8 vorzusehen. Die anderen Bauteile des Pumpenelementes E können weiter verwendet werden, abgesehen von einem linksseitigen, an den kleineren Kolbendurchmesser angepaßten Federwiderlager für die Rückholfeder 18.

## Patentansprüche

1. Pumpenaggregat (A) für Schmieröl, insbesondere zur Öl-Verbrauchsschmierung von Kompressoren, mit wenigstens einem Pumpengehäuse (G), in dem in Reihenanordnung für jede Schmierstelle ein mit einem gemeinsamen Antrieb verbundenes Kolbenpaar vorgesehen ist, das auf der einem Schmierstellenreservoir (R) zugewandten Ansaugseite einen verschiebbaren Dosierkolben (F) und stromauf des Schmierstellenanschlusses einen verschiebbaren Arbeitskolben (Z) aufweist, und mit einer optischen Öl-Tropf-Kontrollvorrichtung (K) mit einem Schauglas, wobei an der Saugseite des Arbeitskolbens (Z) eine im wesentlichen überdruckfreie Ansaugstrecke (F) vorgesehen ist, in der stromauf des Arbeitskolbens (Z) die Öl-Tropf-Kontrollvorrichtung (K) angeordnet ist, **dadurch gekennzeichnet,** daß die Dosier- und Arbeitskolben (Z, F) koaxial und hintereinanderliegend in einem als Baueinheit mit einem Einschraubgehäuse (7) ausgebildeten und in das Pumpengehäuse (G) eingesetzten Pumpenelement (E) angeordnet sind, und daß am Pumpenelement (E) zwischen einer Einstellvorrichtung (V) und dem Einschraubgehäuse (7) ein Zwischenteil (9) mit einem Rückschlagventil (M) und einem Schmierstellenanschluß (5, 36) vorgesehen ist.

2. Pumpenaggregat nach Anspruch 1, **dadurch gekennzeichnet,** daß das Pumpenelement (E) zu einer Einstellung der Förderleistung während des Betriebs des Pumpenaggregats (A) ein außerhalb des Pumpengehäuses (G) freiliegendes Einstellorgan (C) aufweist.

3. Pumpenaggregat nach wenigstens einem der vorhergehenden Ansprüche, **dadurch gekennzeichnet,** daß der Dosierkolben (F) mittels einer durch eine Rückstellfeder (18) axial vorgespannten Anschlagkupplung (D) in einer Bewegungsrichtung an einer relativ zum Einschraubgehäuse (7) axial verstellbaren Einstellhülse (S) abfangbar ist, die den Bewegungshub des Dosierkolbens (F) begrenzt, und daß die Einstellhülse (S) einen durch einen Abdichtbereich (20) nach außen aus dem Pumpenelement (E) ragenden Endabschnitt (19) aufweist, auf dem das Einstellorgan (C) angeordnet ist.

4. Pumpenaggregat nach Anspruch 3, **dadurch gekennzeichnet,** daß das Einstellorgan (C) aus zwei eine vorbestimmte Schlüsselweite definierenden Abflachungen (21) im Endabschnitt (19) gebildet ist, und daß im Zwischenteil (9) eine Kugeldrehverrastung (17) mit mehreren Raststufen vorgesehen ist.

5. Pumpenaggregat nach wenigstens einem der vorhergehenden Ansprüche, **dadurch gekennzeichnet,** daß in der Öl-Tropf-Kontrollvorrichtung (K) zwischen dem Schmierölreservoir (R) und einer Tropfdüse (31) in der Ansaugstrecke (F)) oberhalb des Füllstands des Schmierölreservoirs (R) eine Überlaufschwelle (29) vorgesehen ist.

6. Pumpenaggregat nach wenigstens einem der vorhergehenden Ansprüche, **dadurch gekennzeichnet,** daß die Öl-Tropf-Kontrollvorrichtung (K) oberhalb des Füllstands des Schmierölreservoirs (R), vorzugsweise auf der Oberseite des Pumpengehäuses (G), angeordnet ist.

7. Pumpenaggregat nach wenigstens einem der vorhergehenden Ansprüche, **dadurch gekennzeichnet,** daß die Öl-Tropf-Kontrollvorrichtung (K) in einem Gehäuseteil (27) angeordnet ist, der ansteigende und abfallende Abschnitte (28, 30) der Ansaugstrecke (F) sowie die Überlaufschwelle (29) enthält, daß in dem Gehäuseteil (27) im abfallenden Abschnitt (30) eine Aufnahme (37) für die Tropfdüse (31) und Widerlager (38) für eine stehendes Schaurohr (33) vorgesehen sind, und daß der Gehäuseteil (27) im Bereich zwischen den Widerlagern wenigstens eine nach außen offene Ausnehmung (34) besitzt, in der sich das Schauglasrohr (33) freiliegend erstreckt.

8. Pumpenaggregat nach wenigstens einem der vorhergehenden Ansprüche, **dadurch gekennzeichnet,** daß das Pumpenaggregat (A) bis zu drei in Reihe hintereinanderliegende Pumpengehäuse (G) mit je einer Antriebswelle (W) aufweist, und daß die Antriebswellen (W) über lösbare Kupplungen (41, 42) miteinander verbunden sind.

9. Pumpenaggregat nach wenigstens einem der vorhergehenden Ansprüche, **dadurch gekennzeichnet,** daß das Pumpengehäuse (G) eine durchgehende Antriebswelle (W) und bis zu acht Pumpenelemente (E) mit je einem Schmierstellenanschluß (36) und je einer Öl-Tropf-Kontrollvorrichtung (K) aufweist.

10. Pumpenaggregat nach wenigstens einem der vorhergehenden Ansprüche, **dadurch gekennzeichnet,** daß die Antriebswelle (W) eine Exzenterwelle ist die über eine elastische Kupplung (4) mit einem in dem Pumpenaggregat (A) angeordneten Drehstrom-Getriebemotor (2, 3) verbindbar ist.
